# EUROPEAN PATENT APPLICATION

(11) **EP 4 772 443 A2**
(43) Date of publication of application: **08.07.2026**
(21) Application number: 25222473.8
(22) Date of filing: 11.12.2025
(51) Int. Cl.: B64U 10/20, B64U 20/50, B64U 30/12, B64U 30/21, B64U 30/297, B64U 60/40, B64U 70/40

(54) **FOLDABLE ROTARY WING AIRCRAFT**

(30) Priority: 03.01.2025 US 202519009509
(71) Applicant: Lockheed Martin Corporation, Bethesda, Maryland 20817 (US)
(72) Inventor: Bunting, Colin K., Branford, 06405 (US); Eller, Erez, Plymouth, 06782 (US)
(74) Representative: Schmitt-Nilson Schraud Waibel Wohlfrom Patentanwälte Partnerschaft mbB

(57) **Abstract**

A convertible aircraft includes a fuselage defining a flight axis, and a wing assembly including a pair of wings. Each wing includes a first panel coupled to the fuselage and extending along a wing axis, transverse to the flight axis, a second panel including a thruster having a blade assembly configured to rotate about a thruster axis, a first hinge configured to couple the second panel to the first panel for pivoting about a first hinge axis, a third panel, and a second hinge configured to couple the third panel to the second panel for pivoting about a second hinge axis, parallel to the first hinge axis.

## Description

The concepts described herein relate to convertible aircrafts capable of vertical take-off and landing and wing powered flight.

Aircraft, and specifically vertical take-off and landing (VTOL) aircraft, utilize thrusters (e.g., a rotor system) to provide lift, control, and thrust during flight operations. A convertible VTOL aircraft, such as a tiltrotor, tail-sitter, or tiltwing aircraft, is capable of both thruster powered flight, in which thrusters provide a combination of lift, control, and thrust, and wing born flight, in which the wings provide the lift and the thrusters primarily provide thrust and control.

In some instances, it may be desired to carry loads underneath a winged tail sitter type VTOL aircraft. These loads may be attached directly to the airframe or may be supported by a rope or sling carried below the airframe. The aircraft may be limited in lift power by the amount of thrust provided by the rotor assemblies.

In one aspect, the present disclosure provides a tail-sitter aircraft that includes a fuselage extending along a flight axis between a nose and a base, a landing gear assembly configured to support the aircraft when the aircraft is grounded, a first wing coupled to the fuselage and extending along a wing axis transverse to the flight axis, and a second wing coupled to the fuselage and extending along the wing axis opposite the first wing. The tail-sitter aircraft further includes a first thruster defining a first thruster axis having a first blade assembly coupled to the first wing for rotation about the first thruster axis, and a second thruster defining a second thruster axis having a second blade assembly coupled to the second wing for rotation about the second thruster axis. When the aircraft is operable in a hover mode, in which the first wing and second wing are positioned such that the first thruster axis and the second thruster axis extend in a vertical direction parallel to the flight axis, and when the aircraft is operable in a rotor wing mode, in which the first wing and second wing are rotated equal and opposite about the wing axis such that the first thruster axis and the second thruster axis extend in an inclined direction with respect to the flight axis and the first wing and the second wing rotate about the flight axis.

In another aspect, a convertible aircraft includes a fuselage defining a flight axis, and a wing assembly including a pair of wings. Each wing includes a first panel coupled to the fuselage and extending along a wing axis, transverse to the flight axis, a second panel including a thruster having a blade assembly configured to rotate about a thruster axis, a first hinge configured to couple the second panel to the first panel for pivoting about a first hinge axis, a third panel, and a second hinge configured to couple the third panel to the second panel for pivoting about a second hinge axis, parallel to the first hinge axis.

In another aspect, a tail-sitter aircraft includes a fuselage extending along a flight axis between a nose and a base, a landing gear assembly configured to support the aircraft with the flight axis generally orthogonal to the ground while the aircraft is grounded, a first wing, a first thruster, a second wing, and a second thruster. The first wing is coupled to the fuselage and extends along a wing axis transverse to the flight axis. The first wing includes a first innermost panel coupled to the fuselage for rotation about the wing axis, a first inboard panel hingedly coupled to the first innermost panel, and a first outboard panel hingedly coupled to the first inboard panel. The first thruster is coupled to the first wing and defines a first thruster axis. The second wing is coupled to the fuselage and extends along the wing axis, opposite the first wing. The second wing includes a second innermost panel coupled to the fuselage for rotation about the wing axis, a second inboard panel hingedly coupled to the second innermost panel, and a second outboard panel hingedly coupled to the second inboard panel. The second thruster is coupled to the second wing and defines a second thruster axis. The aircraft is operable in a plurality of modes including: 1) a folded hover mode, in which the first inboard panel is inclined with respect to the first innermost panel, the second inboard panel is inclined with respect to the second innermost panel, and the first thruster axis and the second thruster axis are parallel to the flight axis; 2) an extended hover mode, in which the first inboard panel is aligned with the first innermost panel, the second inboard panel is aligned with the second innermost panel, and the first thruster axis and the second thruster axis extend in a vertical direction orthogonal to the ground and parallel to the flight axis; 3) a rotor wing mode, in which the first inboard panel and first outboard panel are aligned with the first innermost panel, the second inboard panel and second outboard panel are aligned with the second innermost panel, and the first thruster axis and the second thruster axis are inclined relative to the flight axis; and 4) a cruise mode, in which the first inboard panel is aligned with the first innermost panel, the second inboard panel is aligned with the second innermost panel, the first thruster axis and the second thruster axis extend in a horizontal direction parallel to the ground and parallel to the flight axis. The aircraft is movable between the plurality of modes in flight.

Other aspects will become apparent by consideration of the detailed description and accompanying drawings.

### BRIEF DESCRIPTION OF THE DRAWINGS

FIG. 1 is a perspective view of a first embodiment of a convertible aircraft in an extended configuration and operable in an extended hover mode.
FIG. 2 is a perspective view of the convertible aircraft of FIG. 1 operating in a rotor wing mode.
FIG. 3 is a top view of the convertible aircraft of FIG. 1.
FIG. 4A illustrates a first step in an exemplary process using the convertible aircraft of FIG. 1 to lift a load.
FIG. 4B illustrates a second step in the exemplary process of FIG. 4A.
FIG. 4C illustrates a third step in the exemplary process of FIG. 4A.
FIG. 4D illustrates a fourth step in the exemplary process of FIG. 4A.
FIG. 5 is a further perspective view of the convertible aircraft of FIG. 1 in a folded configuration on a landing pad.
FIG. 6 is a perspective view of a second embodiment of a convertible aircraft in an extended configuration and operable in an extended hover mode.
FIG. 7 is a perspective view of the convertible aircraft of FIG. 6 in a folded configuration and operable in a folded hover mode.
FIG. 8 is a top view of the convertible aircraft of FIG. 6 in a storage configuration.
FIG. 9 is a perspective view of the convertible aircraft of FIG. 6 in a rotor wing mode.
FIG. 10 is a perspective view of the convertible aircraft of FIG. 6 in a cruise mode.
FIG. 11 illustrates the convertible aircraft of FIG. 6 during a take-off operation in the folded configuration.
FIG. 12 illustrates the convertible aircraft of FIG. 6 during a first portion of an unfolding operation.
FIG. 13 illustrates the convertible aircraft of FIG. 6 during a further portion of an unfolding operation.
FIG. 14 illustrates the convertible aircraft of FIG. 6 during a final portion of an unfolding operation.
FIG. 15A illustrates a first step in an exemplary process using the convertible aircraft of FIG. 6 to lift a load, in which the aircraft is in the extended configuration and operating in extended hover mode above the load.
FIG. 15B illustrates a second step in the exemplary process of FIG. 15A, in which the aircraft has secured the load and is transitioning to the rotor wing mode.
FIG. 15C illustrates a third step in the exemplary process of FIG. 15A, in which the aircraft operates in rotor wing mode to lift the load.
FIG. 15D illustrates a fourth step in the exemplary process of FIG. 15A, in which the aircraft operates in rotor wing mode to transport the load.
FIG. 16 is a perspective view of a third embodiment of a convertible aircraft in a folded configuration and operable in folded hover mode.
FIG. 17 is a perspective view of the convertible aircraft of FIG. 16 in an extended configuration and operable in an extended hover mode.
FIG. 18 is a perspective view of the convertible aircraft of FIG. 16 in a rotor wing mode.
FIG. 19 is a perspective view of the convertible aircraft of FIG. 16 in a cruise mode.

Before any embodiments are explained in detail, it is to be understood that the embodiments described herein are provided as examples and the details of construction and the arrangement of the components described herein or illustrated in the accompanying drawings should not be considered limiting. All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Also, it is to be understood that the phraseology and terminology used herein is for the purpose of description and should not be regarded as limited. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting, and coupling. Further, "connected" and "coupled" are not restricted to physical or mechanical connections or couplings. In some operable embodiments according to the disclosure, the drawings are to scale, although not-to-scale embodiments are also contemplated.

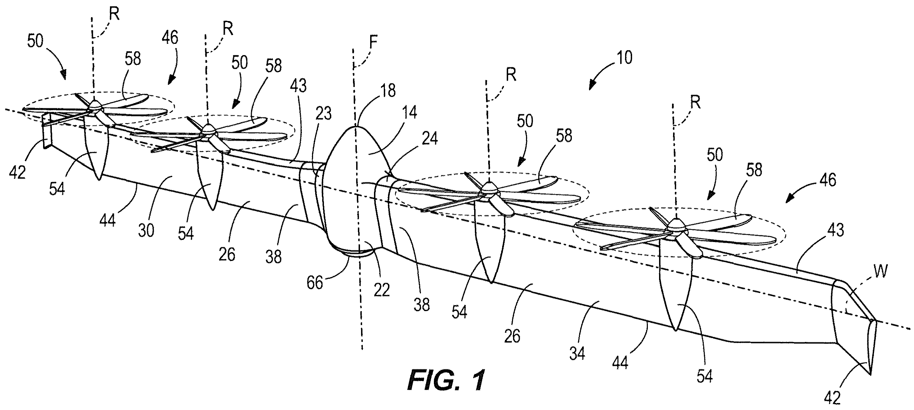

FIG. 1 illustrates one embodiment of a convertible aircraft 10. The convertible aircraft 10 includes a fuselage 14, extending between a nose 18 and a base 22, and a wing assembly 26. The convertible aircraft 10 is capable of vertical take-off and landing along a flight axis F. In the illustrated embodiment, the flight axis F extends longitudinally through the fuselage 14 between the nose 18 and the base 22. The fuselage 14 includes a first side 23 and a second side 24 positioned between the nose 18 and the base 22. In other embodiments, the fuselage 14 may have other shapes or designs. The wing assembly 26 extends along a wing axis W, transverse to the flight axis F. The wing assembly 26 includes a first wing 30 and a second wing 34 each extending between a proximal end 38 and a distal end 42. The proximal end 38 of the first wing 30 is coupled to the fuselage 14 at the first side 23 and extends along the wing axis W in a first direction to a wing tip at the distal end 42. The proximal end 38 of the second wing 34 is coupled to the fuselage 14 at the second side 24, opposite the first side 23, and extends along the wing axis W in a second, opposite, direction to a wing tip at the distal end 42. Each of the first wing 30 and second wing 34 includes an airfoil extending from a leading edge 43 to a trailing edge 44. In some embodiments, the airfoils of the wings 30, 34 may be similar to the airfoils described in U.S. Patent Application No. 18/635,872, filed April 15, 2024, the entire contents of which is incorporated herein by reference. In some embodiments, the airfoils may increase the ability of the aircraft to transition between flight modes while airborne.

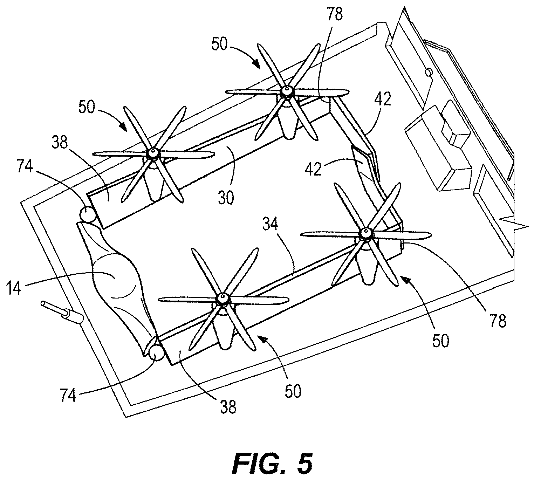

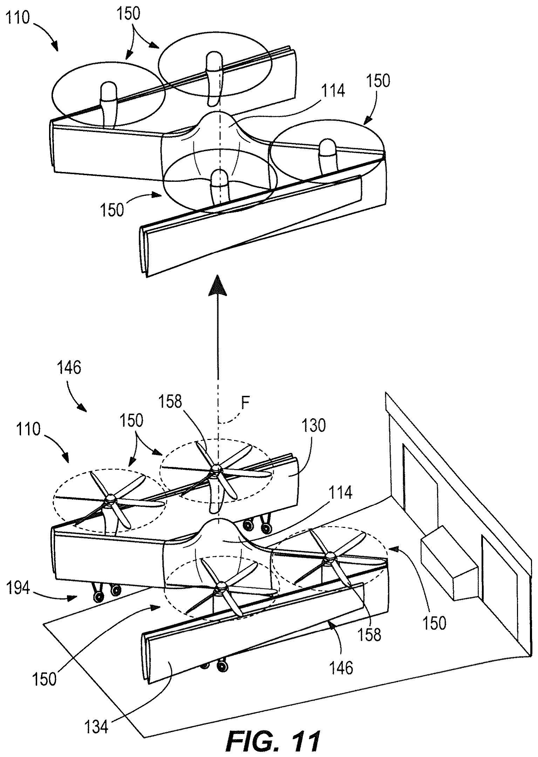

With continued reference to FIG. 1, the aircraft 10 includes a thruster system 46 including a plurality of rotors 50. In the illustrated embodiment, the thruster system 46 includes four rotors 50, with two of the rotors 50 positioned on the first wing 30 and two of the rotors 50 positioned on the second wing 34. In some embodiments, the thruster system 46 may include more or fewer than four of the rotors 50 and the rotors 50 may be positioned on different locations of the aircraft 10, including but not limited to the fuselage 14. In the illustrated embodiment, the rotors 50 each include a nacelle 54 formed in the wing assembly 26 and a blade assembly 58 coupled to the nacelle 54 and defining a rotor axis R. As seen in FIGS. 1-4D, the blade assemblies 58 are rotatable about the rotor axis R. FIG. 5 illustrates stationary blade assemblies 58 when the aircraft is grounded. In some embodiments, the aircraft 10 includes one or more tails or landing gear 194 (FIG. 11) configured to engage a support surface when the aircraft 10 is landed. In other embodiments, the tails and landing gear 194 may be coupled to the nacelles 54, the wings 30, 34, or the fuselage 14, or any other part of the aircraft 10 to support the aircraft 10 when landed. The aircraft 10 may include additional systems not discussed herein relating to control, thrust, or other flight capabilities.

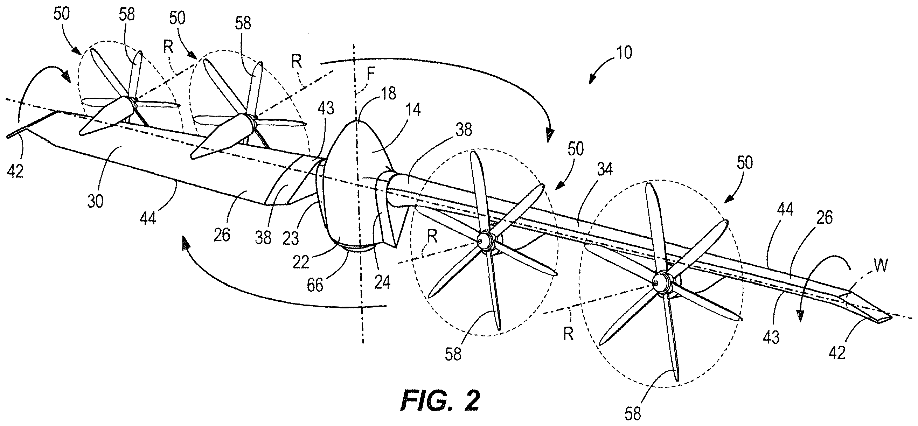

With reference now to FIGS. 1 and 2, the wings 30, 34 are rotatably supported on the fuselage 14 for rotation about the wing axis W. Specifically, the first wing 30 is supported at the first side 23 for rotation about the wing axis W and the second wing 34 is supported at the second side 24 of the fuselage for rotation about the wing axis W in an opposite direction. In the illustrated embodiment, the wings 30, 34 are each rotatable from an upright position to an inclined position. In the upright position, the leading edge 43 is positioned generally above the trailing edge 44. In the inclined position, the leading edge 43 is generally offset from the trailing edge 44. In the illustrated embodiment, the fuselage 14 is shaped such that when the wings 30, 34 are in the upright position, the airfoils of the wings align with the first side 23 and second side 24 of the fuselage 14, respectively. When the wings 30, 34 are in the inclined position, the airfoils of the wings 30, 34 are offset from the sides 23, 24 of the fuselage 14. In the illustrated embodiment, the first wing 30 rotates from the upright position to the inclined position in a clockwise direction and the second wing 34 rotates from the upright position to the inclined position in a counter-clockwise direction (as seen in FIG. 2). Thus, the wing assembly 26 resembles a rotor blade assembly. When the wings 30, 34 are in the upright position the rotor axes R of the rotors 50 are generally vertical and parallel to the flight axis F. When the wings 30, 34 are in the inclined position, the rotor axes R of the rotors 50 are generally inclined with respect to vertical and the flight axis F.

With reference to FIG. 1, the aircraft 10 is operable in a hover mode in which the wings 30, 34 are in the upright position and thus the rotor axes R are generally vertical and parallel to the flight axis F. In the hover mode, the thruster system 46 provides up to a first level of thrust. The thruster system 46 may provide enough thrust to overcome a weight of the aircraft 10 to lift the aircraft 10 above the ground, and control altitude above ground. The thruster system 46 may allow for vertical movement and acceleration. The first level of thrust is equivalent to a sum of the thrust provided by all four of the rotors 50. Each of the rotors 50 may have a diameter between 20 and 25 feet. In one embodiment, each of the rotors 50 includes a wingspan of 150 feet and are each capable of generating thrust up to 20,000 Ibf each. The blade assemblies 58 of the rotors 50 may include cyclic and collective pitch control to adjust the direction of thrust applied to the aircraft and to allow the aircraft to be moved horizontally in addition to vertically. Thrust difference between rotors may also be used to control the vehicle in pitch, roll, yaw, and altitude. In addition to thruster collective pitch control to change thrust, thrust may also be changed be varying the speed of the rotors.

With reference to FIG. 2, the aircraft 10 is operable in a rotor wing mode, in which the wings 30, 34 are in the inclined position and thus the rotor axes R are inclined with respect to vertical and the flight axis F. The thruster system 46 continues to operate the rotors 50, which now apply an inclined thrust vector, causing the entire wing assembly 26 to rotate about the flight axis F. As the wing assembly 26 rotates, it generates up to a second level of thrust. The second level of thrust is based on the wingspan of the wing assembly 26 (i.e., the distance between the wing tip at the distal end 42 of the first wing 30 and the wing tip at the distal end 42 of the second wing 34) and the vertical component of rotor thrust. The wing assembly 26 may have a wingspan between 150 and 180 feet. In one embodiment, the wingspan of the wing assembly 26 is 250 feet. Thus, the thrust generated by the aircraft 10 in the rotor wing mode may be 3 times the thrust generated in the hover mode.

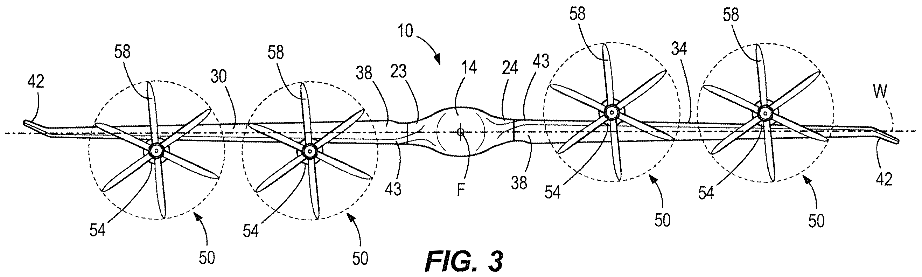

As seen in FIG. 3, in some embodiments, the aircraft 10 includes wings 30, 34 with geometry designed to improve performance of the wing assembly 26 when the aircraft 10 is operated in rotor wing mode, despite degrading performance in cruise mode. Additionally, the wing tip at the distal end 42 of the first wing 30 and the wing tip at the distal end 42 of the second wing 34 are extending on opposite sides of the wing axis W, resulting in dihedral and anhedral wing angles cruise mode, anhedral only in rotor wing mode. In other embodiments, other wing designs may be used to decrease drag and increase efficiency of the wings 30, 34 in specific modes, in which (similar to FIG. 3) the aircraft 10 is inclined so the flight axis F is generally horizontal and the aircraft 10 flies forward along the flight axis F. In other embodiments, the other wing designs can include leading-edge droop flaps or trailing-edge flaps to adjust an effective camber and twist of the wings 30, 34 in the rotor wing mode, and/or remove deflection in cruise mode. Specifically, when aircraft 10 is operating in the rotor wing mode, the leading-edge droop flaps or trailing-edge flaps are symmetrical on respective wings 30, 34, and asymmetrical on respective wings 30, 34 when the aircraft 10 is operating in the cruise mode to improve efficiency in the respective operational modes.

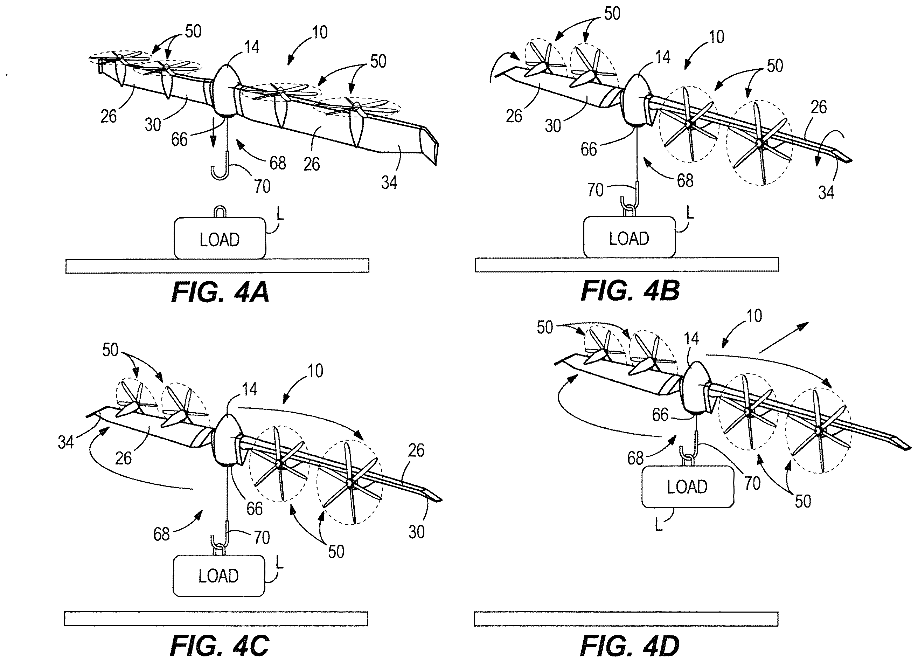

Turning to FIGS. 4A-4D, the aircraft 10 may be transitioned between the hover mode and the rotor wing mode while in flight or airborne. The rotor wing mode may be especially advantageous for providing the needed thrust to lift heavy loads. The aircraft 10 includes an attachment point 66. In the illustrated embodiment, the attachment point 66 is coupled to the base 22 of the fuselage 14. A lifting assembly 68 is coupled to the attachment point 66. The lifting assembly 68 may include a winch assembly, a hook, a rope, a chain, a sling, and/or any other components used to secure a load (such as load L) to the aircraft 10. For illustrative purposes, FIGS. 4A-4D show the lifting assembly 68 including a hook 70 that couples to the load L. As seen in FIG. 4A, the aircraft 10 may be operated in hover mode and may travel to the location of the load L. The aircraft 10 may lower or may use a winch assembly to lower the lifting assembly 68 down to engage with the load L. As seen in FIG. 4B, once the connection point (e.g., the hook 70) of the lifting assembly 68 is secured to the load L, the aircraft 10 transitions from hover mode to rotor wing mode. In some embodiments, the aircraft 10 may include a controller configured to automatically determine when to transition into rotation mode. In some embodiments, the aircraft 10 may be operated by an on-board pilot or may be remotely operated by a pilot who initiates the transition. In other embodiments, the aircraft 10 may be instructed to transition to rotor wing mode in other ways.

The aircraft 10 transitions from hover mode to rotor wing mode by rotating the wings 30, 34 about the wing axis W so that the thrust provided by the rotors 50 drives the wing assembly 26 to rotate about the flight axis F. In some embodiments, the rotational connection between the wings 30, 34 and the fuselage 14 are powered and actuatable. For example, the connection may include an actuator configured to drive the wings 30, 34 to rotate about the wing axis W equal and opposite angles to produces collective pitch control of the rotating wings. In some embodiments, the wing assembly 26 may be capable of cyclic pitch control while the aircraft 10 is in rotor wing mode. In some embodiments, the rotational connection may be a free/locked connection. The wings 30, 34 may be locked in the upright position. The aircraft 10 may disengage the lock and forces (e.g., caused by the rotors 50 or other control surfaces of the aircraft, not discussed herein) drive the wings 30, 34 to rotate until they reach the inclined position at which point the same lock or a different lock engages the wings 30, 34 and secures the wing assembly 26 in the inclined position. In other embodiments, other methods may be used to control rotation of the wings 30, 34 about the wing axis W.

With reference to FIGS. 3 and 4C, when the aircraft 10 is operating in rotor wing mode, the aircraft 10 rotates about the flight axis F and generates thrust to lift the aircraft 10 and the attached load L upward. In the illustrated embodiment, the fuselage 14 includes a first side 23 coupled with the first wing 30, a second side 24 coupled with the second wing 34, and a swiveling load attachment point 66 configured to selectively receive the attached load L via the hook 70. Together, the first side 23 and the first wing 30, and the second side 24 and the second 34 all co-rotate about the flight axis F when the aircraft 10 is operating in the rotor wing mode. As the sides 23, 24 and respective wings 30, 34 are rotating about the flight axis F, the swiveling load attachment point 66 remains stationary, as the swiveling load attachment point 66 is rotationally disengaged from the rotating aircraft 10 so that the load L does not rotate, becoming unstable in flight, or rotate relative to the ground when picking up or placing the load L. In some embodiments, the load attachment point 66 requires bearings to reduce rotational friction due to the high load between the rotating aircraft 10 and load L. In other embodiments, an additional torque is actively applied to the load attachment point 66 to counteract the bearing friction, to provide the ability to rotate the load L relative to the ground for precision placement and counteract aerodynamic forces and moments on the load L in flight; for example, due to winds or maneuvering. In yet other embodiments, more than one load attachment point 66 or hook 70 can be used, as helicopter external load operations many use multiple lines, spreader bars, other devices, and remotely activated cargo hooks. In yet other embodiments, other methods may be used to rotationally disengage the attachment point 66 from aircraft 10, and actively control the load L orientation relative to the ground and aircraft flight path.

As seen in FIG. 4D, the aircraft 10, still operating in rotor wing mode, may travel to a new location to deliver the load L. In some embodiments, the aircraft 10 may use a winch assembly or similar to lift the load closer to the attachment point 66. In other embodiments, the load L may stay at a fixed distance from the attachment point 66. The load L may then be set down by the aircraft 10 by operating the steps in reverse.

As described above, the convertible aircraft 10 is operable in a hover mode and a rotor wing mode to increase the vertical thrust and lifting capabilities of the aircraft 10. As briefly discussed above with reference to FIG. 3, the aircraft 10 is further operable in a cruise mode, in which the flight axis F is generally horizontal and the airfoil of the wing assembly 26 provides lift to the aircraft 10.

Turning to FIG. 5, in some embodiments, the aircraft 10 may also be movable between an extended configuration (FIG. 1) and a folded configuration (FIG. 5). The aircraft 10 is illustrated as grounded in FIG. 5, however, the aircraft 10 may be operable in hover mode in the folded configuration as well as the extended configuration. Each wing 30, 34 may include a first joint 74 and a second joint 78 that allow the wings 30, 34 to fold and create a smaller footprint for the aircraft 10. In the illustrated embodiment, in the folded configuration, the first joint 74 is a hinge that rotates approximately 90 degrees, and the second joint 78 is a hinge that rotates approximately 90 or 180 degrees. The wings 30, 34 are folded toward the same side of the aircraft 10, creating a rectangular profile (compared to the linear profile of the extended configuration). The wing tips 42 may connect to each other to lock in place to increase rigidity of the aircraft 10 in flight, or a small gap may be present to prevent rubbing or interference between the structures due to relative motion. Similarly, the rotors 50 are positioned in a rectangular array in the folded configuration. The smaller footprint created by the folded configuration is advantageous for taking off from small spaces. For example, aircraft carrier ships may have limited space on heli-pads to allow for VTOL aircraft to land and take-off. In one embodiment, the folded configuration may allow the aircraft to take-off from a space approximately 40 by 50 feet. In some embodiments, the aircraft 10 may include more or less than four rotors 50, thereby resulting in different array formations when the aircraft 10 is in the folded configuration. Depending on the number of rotors 50, the aircraft 10 could be configured to be arranged in any number of multi-sided polygon arrays.

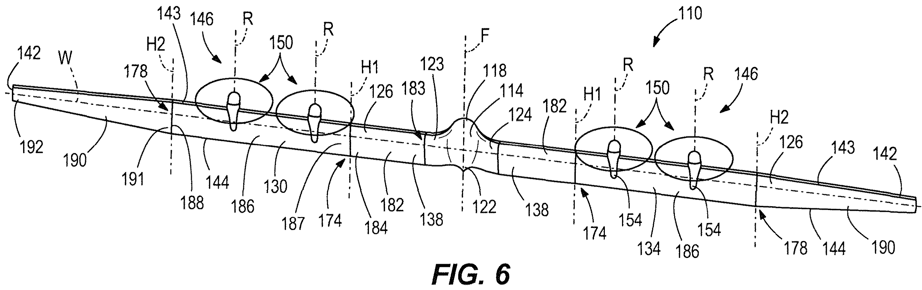

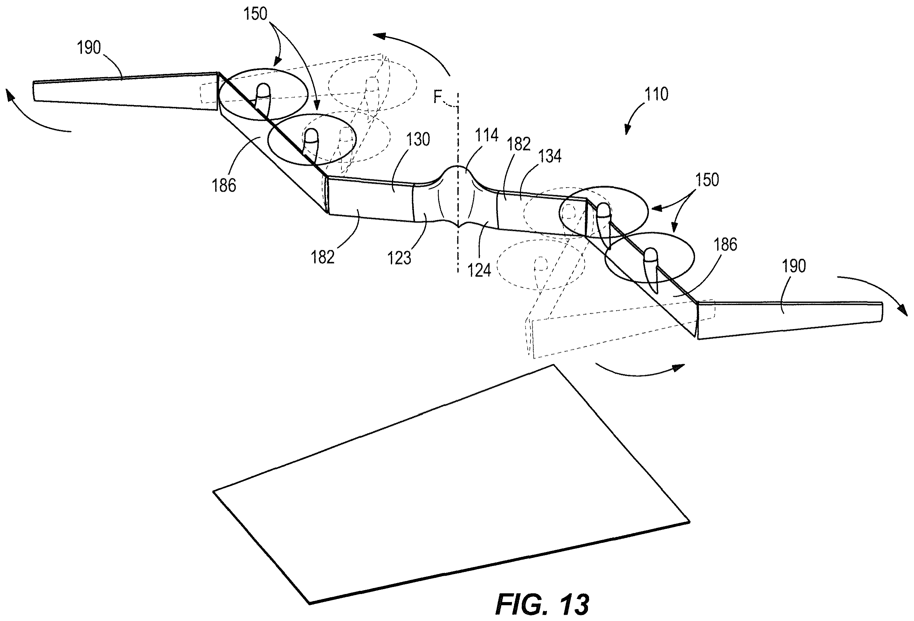

Turning now to FIGS. 6-15D, another embodiment of a convertible aircraft 110 is illustrated. The convertible aircraft 110 may be generally similar to the convertible aircraft 10 of FIGS. 1-6 and, unless otherwise specified, features of the aircraft 110 may be integrated into the aircraft 10 and vice versa.

With reference to FIG. 6, the convertible aircraft 110 includes a fuselage 114, extending between a nose 118 and a base 122, and a wing assembly 126. The convertible aircraft 110 is capable of vertical take-off and landing along a flight axis F. In the illustrated embodiment, the flight axis F extends longitudinally through the fuselage 114 between the nose 118 and the base 122. The fuselage 114 includes a first side 123 and a second side 124 positioned between the nose 118 and the base 122. In other embodiments, the fuselage 114 may have other shapes or designs. The wing assembly 126 extends along a wing axis W, transverse to the flight axis F. The wing assembly 126 includes a first wing 130 and a second wing 134 each extending between a proximal end 138 and a distal end 142. The proximal end 138 of the first wing 130 is coupled to the fuselage 114 at the first side 123 and extends along the wing axis W in a first direction to a wing tip at the distal end 142. The proximal end 138 of the second wing 134 is coupled to the fuselage 114 at the second side 124, opposite the first side 123, and extends along the wing axis W in a second, opposite, direction to a wing tip at the distal end 142. Each of the first wing 130 and second wing 134 includes airfoils extending from a leading edge 143 to a trailing edge 144. In some embodiments, the airfoils of the wings 130, 134 may be similar to the airfoils referred to with regard to the convertible aircraft 10.

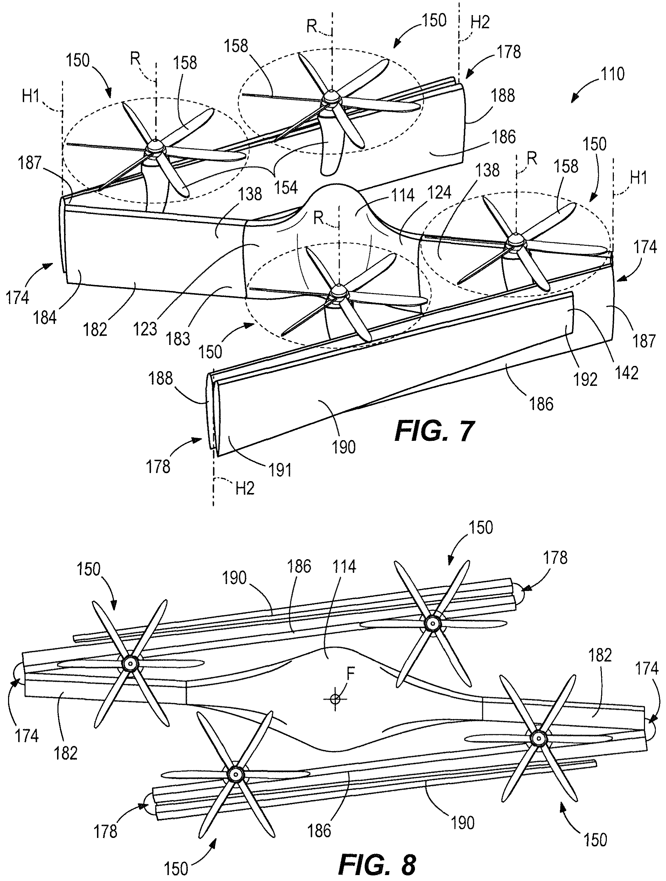

With continued reference to FIG. 6, the aircraft 110 includes a thruster system 146 including a plurality of rotors 150. In the illustrated embodiment, the thruster system 146 includes four rotors 150, with two of the rotors 150 positioned on the first wing 130 and two of the rotors 150 positioned on the second wing 134. In some embodiments, the thruster system 146 may include more or fewer than four rotors 150 and the rotors 150 may be positioned on different locations of the aircraft 110, including the wing assembly 126, the fuselage 114, or any other location. In the illustrated embodiment, the rotors 150 each include a nacelle 154 formed in the wing assembly 126 and a blade assembly 158 (FIG. 7) coupled to the nacelle 154 and defining a rotor axis R. As seen in FIG. 7, the blade assemblies 158 are rotatable about the rotor axes R. FIGS. 6, 9-15D all illustrate the rotors 150 schematically in motion. The aircraft 110 includes one or more landing gear 194 (FIG. 11) configured to engage a support surface when the aircraft 110 is landed. In some embodiments, the landing gear 194 may be coupled to the nacelles 154, the wings 130, 134, or the fuselage 114, or any other part of the aircraft 110 to support the aircraft 110 when landed. One exemplary tail and landing gear assembly 194 is shown schematically in FIG. 11. The aircraft 110 may include additional systems not discussed herein relating to control, thrust, or other flight capabilities.

With reference to FIGS. 6 and 7, in some embodiments, the aircraft 110 may be movable between an extended configuration (FIG. 6) and a folded configuration (FIG. 7). Each wing 130, 134 includes a first joint 174 and a second joint 178 that allow the wings 130, 134 to fold and create a smaller profile for the aircraft 110. In the illustrated embodiment, each of the wings 130, 134 includes a first panel 182, a second panel 186, and a third panel 190. The first panel 182 is the innermost panel (i.e., closest to the fuselage 114) and includes the proximal end 138 of the wing 130, 134. The first panel 182 includes a proximal end 183 and a distal end 184. The first panel 182 is fixed to the first side 123 of the fuselage 114 and extends along the wing axis W in both the extended configuration and the folded configuration. As will be discussed further below, the first panel 182 is supported on the fuselage 114 to rotate about the wing axis W. The distal end 184 of the first panel 182 is coupled to the first joint 174. The second panel 186 is positioned between the first panel 182 and the third panel 190. The second panel 186 may also be referred to herein as the inboard panel 186. The second panel 186 includes a proximal end 187 and a distal end 188. The proximal end 187 of the second panel 186 is coupled to the distal end 184 of the first panel 182 by the first joint 174. The first joint 174, also referred to herein as the inboard hinge 174, supports the second panel 186 for rotation about a first hinge axis H1. The first hinge axis H1 is parallel to the flight axis F. In the illustrated embodiment, the rotors 150 are positioned on the second panel 186. In other embodiments, rotors 150 may alternatively or additionally be positioned on the fuselage 114, the first panel 182, or the third panel 190. The third panel 190 is the outermost panel (i.e., the furthest from the fuselage 114) and is also referred to herein as the outboard panel 190. The third panel 190 includes a proximal end 191 and a distal end 192. The proximal end 191 is coupled to the distal end 188 of the second panel 186 by the second joint 178, also referred to herein as the outboard hinge 178. The third panel 190 is supported by the second joint 178 for rotation about a second hinge axis H2 relative to the second panel 186. The second hinge axis H2 is parallel to the first hinge axis H1 and the flight axis F. While the joints 174, 178 are referred to as hinges, hinge should not be construed to limit the type of joint and instead generally convey the folding relationship between the panels.

With reference to FIG. 7, in the illustrated embodiment, the folded configuration is a generally Z-shaped configuration. The first joint 174 of the first wing 130 is rotated in a first direction (e.g., clockwise as seen in FIG. 7) so the second panel 186 forms an acute angle with the first panel 182, and the second panel 186 is generally adjacent the fuselage 114. The second joint 178 of the first wing 130 is rotated in a second direction, opposite the first direction, (e.g., counter-clockwise as seen in FIG. 7) until the third panel 190 is directly adjacent and extends along the second panel 186. The aircraft 110 is generally symmetrical so the second wing 134 mirrors the first wing 130, and the first joint 174 is rotated in the first direction and the second joint 178 is rotated in the second direction. In other embodiments, the folded configuration may include other angular positions of the joints and other relative positions of the panels. In the illustrated folded configuration, the rotors 150 are arranged in a generally rectangular array and a center of gravity of the aircraft 110 is positioned within the rectangular array and preferably centered on the fuselage 114. The location of the joints 174, 178 relative to the wing axis W (FIG. 6) may be based on the diameter of the blade assemblies 158, the relative length of the wing panels 182, 186, 190, the position of the rotors 150 on the wing panels 182, 186, 190, or any combination of these or other factors. In the illustrated embodiment, the joints 174, 178 are oriented along respective hinge axes H1, H2 parallel to the flight axis F. In other embodiments, the joints 174, 178 are slightly inclined relative to the flight axis F to produce a wing sweep angle when unfolded. In yet other embodiments, the hinges 174, 178 may be offset from the plane of respective wings 130, 134 to improve mechanical advantage of a fold actuator. In the folded configuration, the rotors 150 are sufficiently spaced to decrease aerodynamic interference between the rotors 150. The folded configuration offers a smaller footprint compared to the extended configuration and may be advantageous for taking off from small spaces. In other embodiments, the aircraft 110 may include more or less than four rotors 150, thereby resulting in different array formations when the aircraft 110 is in the folded configuration. Depending on the number of rotors 150, the aircraft 110 could be configured to be arranged in any number of multi-sided polygon arrays.

With reference to FIG. 8, in some embodiments, the aircraft 110 may be movable to a storage configuration. The storage configuration may result in an even smaller footprint of the aircraft 110. In the illustrated storage configuration, the third panels 190 still extend along and directly adjacent to the second panels 186, and the second panels 186 are rotated as close to the fuselage 114 as possible. In some embodiments, the rotation of the second panels 186 about the hinge axis H1 is limited by the interference of the blade assemblies 158 of the rotors 150. As seen in FIG. 8, the blade assemblies 158 are stationary. In some embodiments, the blade assemblies 158 may fold or otherwise collapse to allow the panels to move closer to the fuselage 114. In some embodiments, the rotation of the second panels 186 is limited by other geometry of the aircraft 110. The storage configuration may be used when the aircraft 110 is grounded and being stored. While being supported by the landing gear 194 (FIG. 11), the aircraft 110 may be moved between the folded configuration and the storage configuration by rotating all parts of the aircraft 110 outboard of the fold hinges 174 on respective wings 130, 134 (FIG. 6) relative to the fuselage 114. The landing gear 194 may include free wheels, allowing an outside force to manually move the second panels 186 away from the fuselage 114. In other embodiments, the landing gear 194 may include driven wheels, configured to drive the second panels 186 to rotate away from the fuselage 114. The aircraft 110 may therefore present a small profile for vertical take-off and landing and an even smaller profile for storage while grounded.

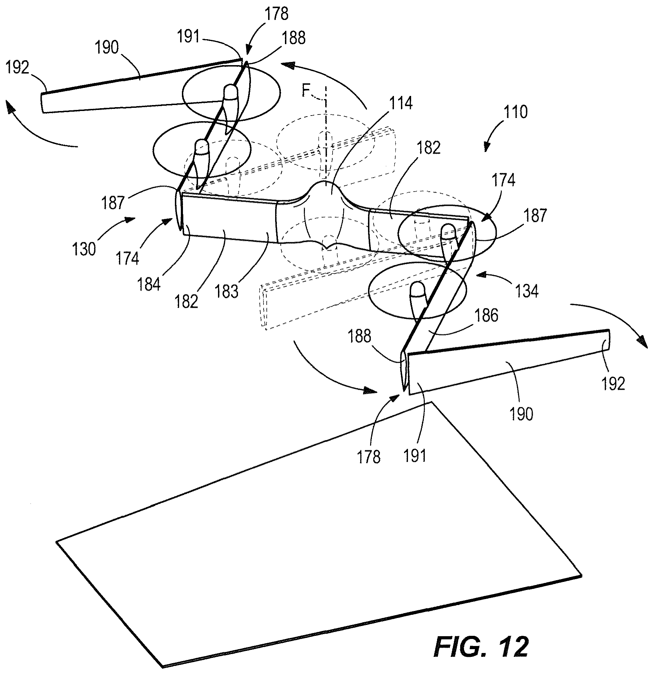

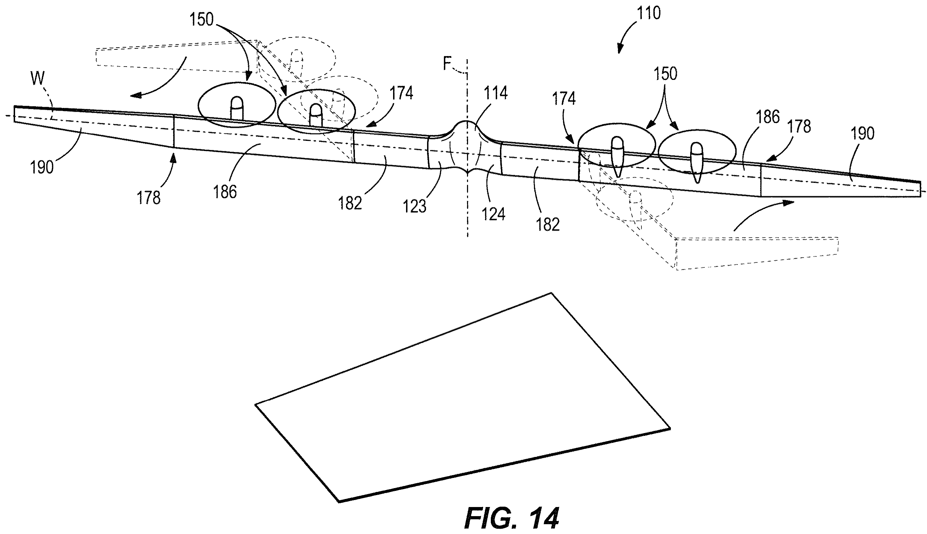

With reference now to FIGS. 11-14, the aircraft 110 is operable in a hover mode and is movable between the folded configuration and the extended configuration while airborne. As seen in FIG. 11, the aircraft 110 may be grounded in a relatively confined space, such as the deck or landing pad of a ship (e.g., an aircraft carrier). As discussed above, while grounded, the aircraft 10 may be supported on the support surface with the flight axis F extending generally vertically (or generally orthogonal to the support surface) by the landing gear assembly 194 (shown schematically). The aircraft 110 may operate the thrust system 146 to rotate the blade assemblies 158 of the rotors 150 to generate the thrust. The aircraft 110 lifts into the air along the flight axis F. One or more of the rotors 150 may include cyclic and/or collective pitch control mechanism for the blade assemblies 158 to adjust the direction of thrust applied to the aircraft 110 by the rotors 150 and allow the aircraft 110 to be moved laterally in addition to vertically. The aircraft 110 may be flown at low speeds to a further location in the folded configuration. The aircraft 110 may be transitioned to the extended configuration. As seen in FIGS. 12-13, the aircraft 110 begins transitioning from the folded configuration to the extended configuration. The aircraft 110 may include a locking mechanism, such as a solenoid actuator, configured to selectively engage portions of the aircraft 110 to lock the position of the joints 174, 178 and help react forces during VTOL and flight operations. In some embodiments, the first joint 174 and the second joint 178 are driven joints and include actuators that drive the panels 186, 190 to rotate about the respective hinge axes H1, H2. In some embodiments, the actuators are positioned in or adjacent each joint 174, 178. In some embodiments, a single actuator may actuate both joints 174, 178, using linkages. In some embodiments including actuators, the aircraft 110 may be paused and flown in any of the positions between the folded and extended configurations. In some embodiments, the aircraft 110 transitions from the folded configuration to the extended configuration as a result flight dynamics, created by pitch control of the rotors 150 and/or control surfaces (not shown) on the wings 130, 134. For example, the aircraft 110 may release the locking mechanism, thereby unlocking the hinges 174, 178, and issue a yaw command that produces net moments on the panels 186, 190 of the wings 130, 134. In some embodiments, the yaw command includes increasing respective thrust on diagonal pairs of rotors 150 on wings 130, 134 to rotate respective panels 186, 190 about respective hinge axes H1, H2 (FIG. 7) until panels 186, 190 are in-line with the wing axis W (FIG. 14) to move the aircraft 110 into the extended position. In some embodiments, other methods are used to unfold the wings 130, 134. In all embodiments, the panels 186, 190 rotate outward from the fuselage 114, as seen in FIGS. 12-14, and into the extended position while the aircraft 110 is airborne, or while the aircraft 110 is grounded on the landing gear 194.

The aircraft 110 is designed to unfold symmetrically, fixing vehicle center of gravity to maintain stability and trim in flight. In some embodiments, the aircraft 110 may include a timing mechanism coupled between the first wing 130 and the second wing 134 to ensure the relative panels 186, 190 unfold symmetrically. The timing mechanism may include mechanical components such as synchronizing cables or linkages or other components. In some embodiments, the timing mechanism relies on electronic control of actuators to ensure symmetry of the aircraft 110. In still further embodiments, other methods may be used. By maintaining symmetry of the aircraft 110, the center of gravity of the aircraft 110 remains evenly supported by the thrust generated by the rotors 150 of the thrust system 146 and the aircraft 110 does not become unbalanced or unstable.

In some embodiments, the rotation of each second panel 186 about the first hinge axis H1 of the first joint 174 and the rotation of each third panel 190 about the second hinge axis H2 of the second joint 178 may occur simultaneously. In some embodiments, each second panel 186 may be entirely rotated out before the third panels 190 are rotated or vice versa. The second panels 186 are rotated from an angled position to an aligned position, in which the second panel 186 extends along the wing axis W from the first panel 182. The third panels 190 are rotated from a stowed position to an aligned position, in which the third panels 190 are aligned with and extend from the second panels 186. Once the third panels 190 and the second panels 186 are moved to the aligned positions, the entire first wing 130 extends along the wing axis W in the first direction and the entire second wing 134 extends along the wing axis W in the second direction. Once in the extended position, the wings 130, 134 may be locked (e.g., by same locking mechanism or a different locking mechanism) to reinforce the joints 174, 178 and prevent unintentional rotation of the panels 186, 190.

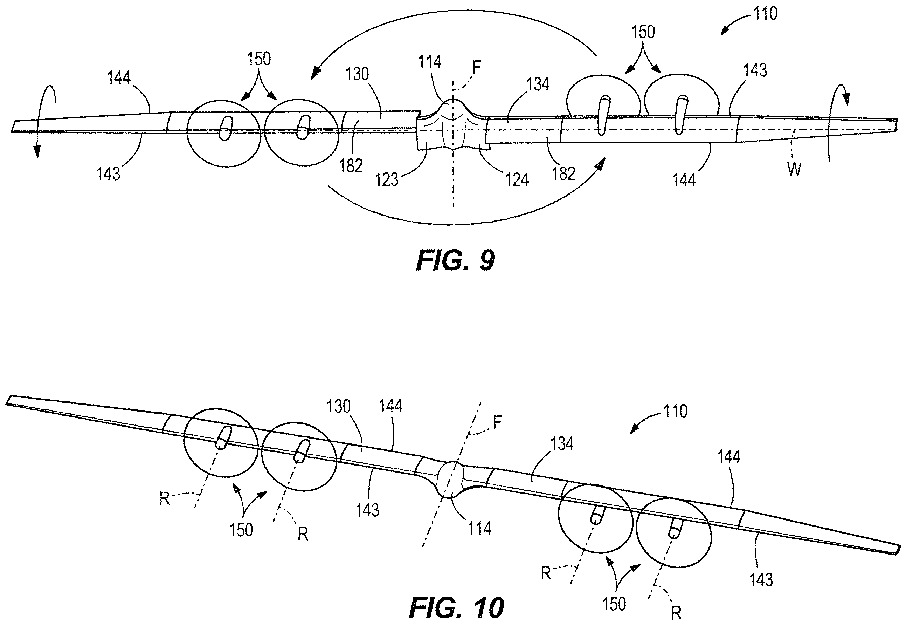

Once the aircraft 110 is unfolded and in the extended configuration, the aircraft 110 may continue to operate in hover mode and move vertically and horizontally by adjusting the thrust of the rotors 150 using RPM, collective, cyclic, control surface rotation, wing rotation, or any combination thereof. Once in the extended configuration, the aircraft may also be transitioned to a rotor wing mode (FIG. 9) or a cruise mode (FIG. 10).

With reference to FIG. 9, the wings 130, 134 are rotatably supported on the fuselage 114 for rotation about the wing axis W. The first panel 182 of the first wing 130 is supported at the first side 123 for rotation about the wing axis W and the first panel 182 of the second wing 134 is supported at the second side 124 of the fuselage for rotation about the wing axis W in an opposite direction. The aircraft 110 may include a locking or braking mechanism that prevents rotation of the wings 130, 134 about the wing axis W in the cruise mode, folded, or storage configurations. In the illustrated embodiment, the wings 130, 134 are each rotatable from an upright position to an inclined position. In the upright position, shown in FIG. 6, the leading edge 143 of each of the wings 130, 134 is positioned generally above the trailing edge 144. In the inclined position, shown in FIG. 9, the leading edge 143 is generally offset from the trailing edge 144. In the illustrated embodiment, the fuselage 114 is shaped such that in the upright position, the proximal ends 138 of the wings 130, 134 align with the respective side 123, 124 of the fuselage 114. In the inclined position, the proximal ends 138 of the wings 130, 134 are rotated approximately +/-70 degrees from the vertical axis F. In other embodiments, the fuselage 114 may be shaped in other ways. In the illustrated embodiment, the first wing 130 rotates from the upright position to the inclined position in a counter-clockwise direction when viewed down the wing axis W from the distal end 142 of the second wing 134. The second wing 134 rotates from the upright position to the inclined position in a clockwise direction when viewed down the wing axis W from the distal end 142 of the second wing 134. With the wings 130, 134 in the inclined position, the wing assembly 126 resembles a rotor blade assembly. When the wings 130, 134 are in the upright position the rotor axes R of the rotors 150 are generally vertical and parallel to the flight axis F. When the wings 130, 134 are in the inclined position, the rotor axes R of the rotors 150 are generally inclined approximately +/-70 degrees with respect to vertical and the flight axis F, to produce a torque about flight axis F to maintain rotational velocity.

In the hover mode, the thruster system 146 provides up to a first level of thrust generating a first level of lift capacity according to the weight of the load L (FIG. 4A). The thruster system 146 may provide enough thrust to overcome a weight of the aircraft 110 and the weight of the load L, lift the aircraft 110 above the ground, and control altitude above ground. The thruster system 146 may allow for vertical movement and acceleration. The first level of thrust is equivalent to a sum of the thrust provided by all the rotors 150. With continued reference to FIG. 9, the aircraft 110 is operable in the rotor wing mode, in which the wings 130, 134 are in the inclined position and thus the rotor axes R are inclined with respect to vertical and the flight axis F. The thruster system 146 continues to operate the rotors 150, which now apply an inclined thrust vector, causing the wings 130, 134 of the wing assembly 126 to rotate about the flight axis F. As the wings 130, 134 of the wing assembly 126 rotate about the flight axis F, the wings 130, 134 act as a rotor blade and generate up to a second level of thrust generating a second lift capacity that is greater than the first lift capacity. The second level of thrust is based on the wingspan of the respective wings 130, 134 of the wing assembly 126 (i.e., the distance between the wing tip at the distal end 142 of the first wing 130 and the wing tip at the distal end 142 of the second wing 134). In some embodiments, the second lift capacity generated by the wings 130, 134 of the wing assembly 126 and the thruster system 146 in rotor wing mode is two to three times greater than the first lift capacity generated by the thruster system 146 in hover mode.

The wing assembly 126 is capable of collective pitch control when the aircraft 110 is operated in rotor wing mode. In some embodiments, the wing assembly 126 is rotatable about the wing axis W during rotor wing mode in order to change a collective pitch of the wing assembly 126. In some embodiments, the wings 130, 134 may freely rotate about the wing axis W and pitch moments may be produced by flight control surfaces (e.g., ailerons, elevators, stabilators, etc.). In some embodiments, collective pitch of the wing assembly 126 is controlled by the cyclic pitch of the rotors 150. In some embodiments, the rotors 150 include inboard rotors 150 and outboard rotors 150 that have different properties to allow for more precise control of the aircraft 110. The collective pitch control of the wing assembly 126 allows the aircraft to vary the thrust applied and either hover or lift heavy loads.

With reference to FIG. 10, the aircraft 110 is further operable in cruise mode. The aircraft 110 may transition between hover mode and cruise mode when the aircraft is in the extended configuration while airborne. The aircraft 110 is a tail-sitter aircraft 110 and is configured to rotate the entire aircraft 110 from an upright position to the forward flight position. In cruise mode, the aircraft 110 is tilted such that the flight axis F is rotated from vertical to generally horizontal, aligned with the flight path. In addition, the rotor axes R of the rotors 150 are each horizontal. In some embodiments, portions of the thruster system 146 are deactivated to decrease the energy consumption in forward. In other embodiments, the thruster system 146 may remain active to add additional thrust and increase the forward flight speed. In cruise mode, the wings 130, 134 are generally aligned with the flight path similar to fixed wing aircraft. In some embodiments, the wings 130, 134 rotate about the wing axis W while in the cruise mode in order to better control the aircraft 110 (e.g., control rolling of the aircraft 110 instead of traditional ailerons). In other embodiments, the aircraft 110 may be operable in additional modes or may have additional features relating to cruise mode not discussed herein. Cruise mode may provide a rapid way to cover larger distances than in rotating wing mode, or traditional rotorcraft.

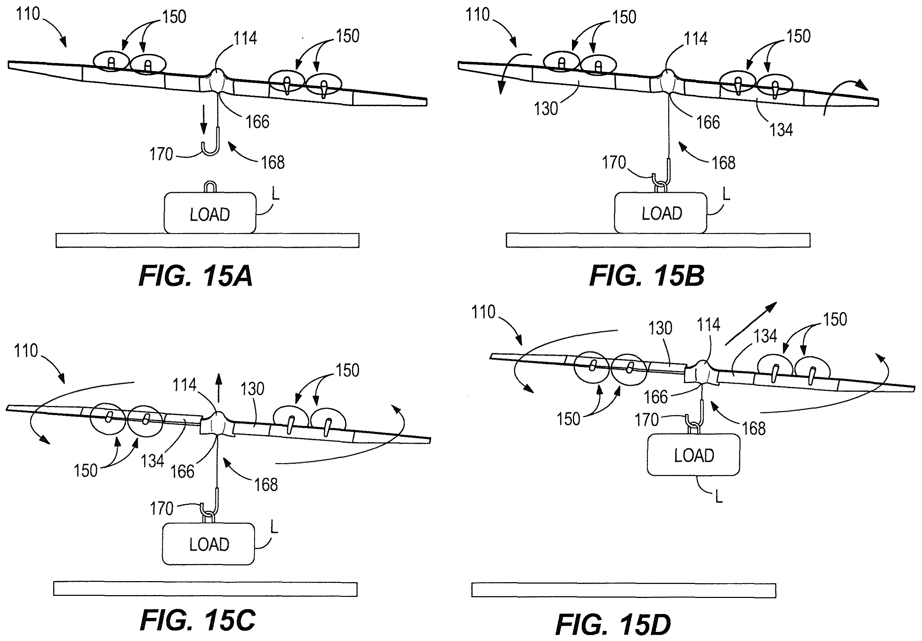

With reference to FIGS. 6, 15A-15D, the aircraft 110 may be transitioned between the hover mode and the rotor wing mode while in flight or airborne. The rotor wing mode may be especially advantageous for providing the needed thrust to lift heavy loads. The aircraft 110 includes an attachment point 166 coupled to the base 122 (FIG. 6) of the fuselage 114. The attachment point 116 includes a lifting assembly 168 that may include a winch assembly, a hook, a rope, a chain, a sling, and/or any other components used to secure a load (such as load L) to the aircraft 110. For illustrative purposes, FIGS. 15A-15D show the lifting assembly 168 including a hook 170 that couples to the load L. As illustrated in FIG. 15A, the aircraft 110 may travel to the location of the load L (in hover mode or in cruise mode) and may be operated in hover mode generally above the load L. The aircraft 110 may lower along the flight axis F or may use a winch assembly to lower the lifting assembly 168 down to engage with the load L. As illustrated in FIG. 15B, once the connection point (e.g., the hook 170) of the lifting assembly 168 is secured to the load L, the aircraft 110 transitions from hover mode to rotor wing mode. In some embodiments, the aircraft 110 may include a controller configured to automatically determine when to transition into rotation mode. In some embodiments, the aircraft 110 may be operated by an on-board pilot or may be remotely operated by a pilot who initiates the transition. In other embodiments, the aircraft 110 may be instructed to transition to rotor wing mode in other ways.

The aircraft 110 transitions from hover mode to rotor wing mode by rotating the wings 130, 134 about the wing axis W from the upright position to the inclined position. The thrust provided by the rotors 150 drives the wings 130, 134 of the wing assembly 126 to rotate about the flight axis F. In some embodiments, the rotational connection between the wings 130, 134 and the fuselage 114 are powered and actuatable. For example, the connection may include a motor configured to drive the wings 130, 134 to rotate about the wing axis W. In such embodiments, the wing assembly 126 may be capable of cyclic and collective pitch control while the aircraft 110 is in rotor wing mode. In some embodiments, the rotational connection may be a free/locked connection. The wings 130, 134 may be locked in the upright position. The aircraft 110 may disengage the lock and force (e.g., caused by the rotors 150 or other control surfaces of the aircraft, not discussed herein) drive the wings 130, 134 to rotate until they reach the inclined position at which point the same lock or a brake engages the wings 130, 134 and secures the wing assembly 126 in the inclined position. In other embodiments, other methods may be used to control rotation of the wings 130, 134 about the wing axis W.

With reference to FIGS. 6 and 15C, when the aircraft 110 is operating in rotor wing mode, the wings 130, 134 of the wing assembly 126 rotate about the flight axis F and generate thrust to lift the aircraft 110 and the attached load L upward. In the illustrated embodiment, the fuselage 114 includes the first side 123 (FIG. 6) coupled with the first wing 130, the second side 124 coupled with the second wing 134, and the load attachment point 166 configured to be rotationally disengaged from the rotating aircraft 110 so that the load L does not rotate, becoming unstable in flight, or rotate relative to the ground when picking up or placing the load L. In some embodiments, the attachment point 166 requires bearings to reduce rotational friction due to the high load between the rotating aircraft 110 and load L. In other embodiments, the attachment point 166 can be connected to the aircraft 110 via an active connection (e.g., a motor). In other embodiments, other methods may be used to rotationally disengage the attachment point 166 from the wing assembly 126.

As seen in FIG. 15D, the aircraft 110, still operating in rotor wing mode, may travel to a new location to deliver the load L. In some embodiments, the aircraft 110 may use a winch assembly, or similar mechanism, to lift the load closer to the attachment point 166. In other embodiments, the load L may stay at a fixed distance from the attachment point 166. The load L may then be set down by the aircraft 110 by operating the steps in reverse.

As described above, the convertible aircraft 110 is operable in a hover mode and a rotor wing mode to increase the vertical thrust and lifting capabilities of the aircraft 110. The aircraft 110 may be transitioned between the hover mode and rotor wing mode while airborne. The aircraft 110 is further foldable between a folded configuration and an extended configuration and is able to be transitioned while airborne.

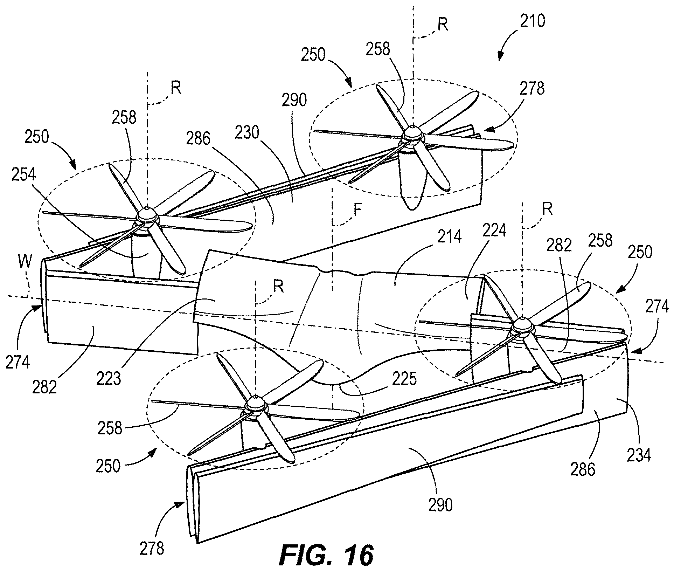

FIGS. 16-19 illustrate another embodiment of a convertible aircraft 210. The convertible aircraft 210 may be generally similar to the convertible aircraft 10 of FIGS. 1-5 and the convertible aircraft 110 of FIGS. 6-15D and, unless otherwise specified, features of the aircraft 210 may be integrated into the aircrafts 10, 110 and vice versa. As discussed above, the aircrafts 10, 110 may include fuselages having different shapes and designs. The convertible aircraft 210 includes one example of a fuselage 214 with a different design. In one embodiment, the fuselage 214 may allow for a pilot or cockpit to be formed in the fuselage 214. The convertible aircraft 210 may be a tilt wing type aircraft rather than a tail sitter type aircraft, in that the center section remains horizontal in all modes of flight.

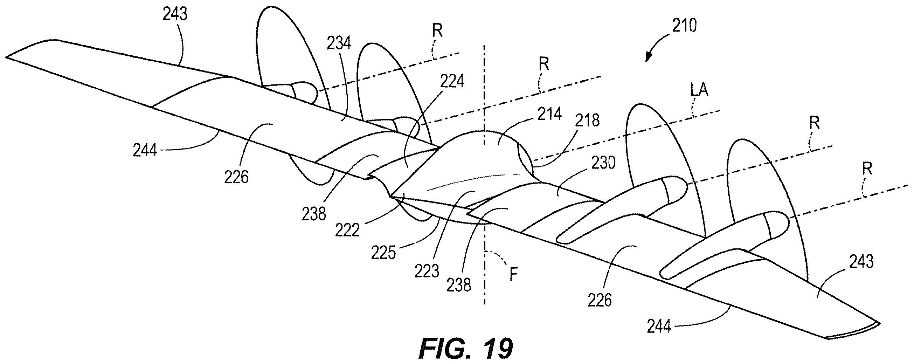

With reference to FIGS. 16-17, the convertible aircraft 210 includes the fuselage 214, extending between a nose 218 and a base 222, and a wing assembly 226. In the illustrated embodiment, the fuselage 214 is shaped so that the fuselage 214 includes a longitudinal axis LA (FIG. 19) extending between the nose 218 and the base 222. The convertible aircraft 210 is capable of vertical take-off and landing along a flight axis F. The flight axis F extends transversely through the fuselage 214. The fuselage 214 includes a first side 223 and a second side 224 positioned between the nose 218 and the base 222. The wing assembly 226 extends along a wing axis W, transverse to the flight axis F. The wing assembly 226 includes a first wing 230 and a second wing 234 each extending between a proximal end 238 and a distal end 242. The proximal end 238 of the first wing 230 is coupled to the fuselage 214 at the first side 223 and extends along the wing axis W in a first direction to a wing tip at the distal end 242. The proximal end 238 of the second wing 234 is coupled to the fuselage 214 at the second side 224, opposite the first side 223, and extends along the wing axis W in a second, opposite, direction to a wing tip at the distal end 242. Each of the first wing 230 and second wing 234 includes airfoils extending from a leading edge 243 to a trailing edge 244. In some embodiments, the airfoils of the wings 230, 234 may be similar to the airfoils referred to above with regard to the convertible aircraft 10.

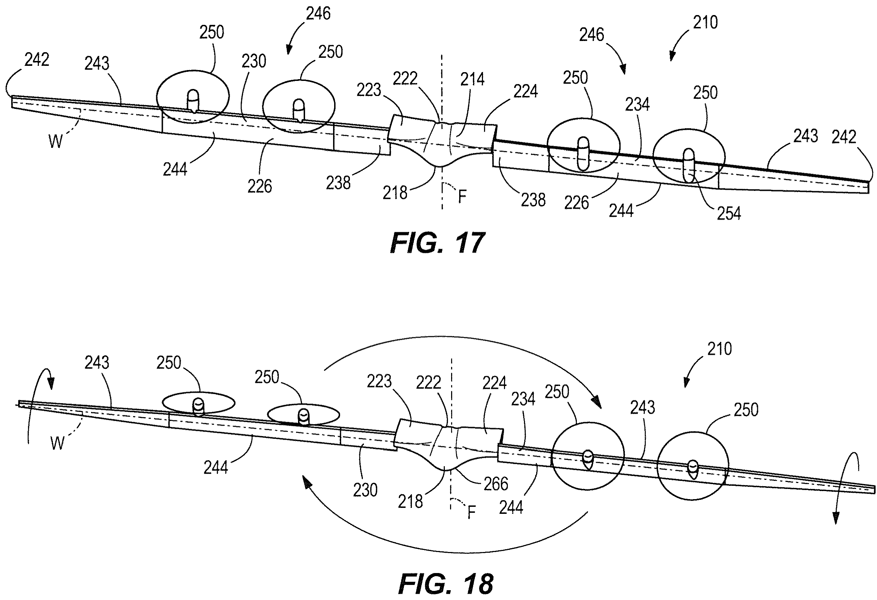

With continued reference to FIG. 17, the aircraft 210 includes a thruster system 246 including a plurality of rotors 250. In the illustrated embodiment, the thruster system 246 includes four rotors 250, with two of the rotors 250 positioned on the first wing 230 and two of the rotors 250 positioned on the second wing 234. In some embodiments, the thruster system 246 may include more or fewer than four rotors 250 and the rotors 250 may be positioned on different locations of the aircraft 210, including the wing assembly 226, the fuselage 214, or any other location. In the illustrated embodiment, the rotors 250 each include a nacelle 254 formed in the wing assembly 226 and a blade assembly 258 coupled to the nacelle 254 for rotation about a rotor axis R, as seen in FIG. 16. FIGS. 17-19 schematically illustrate the rotors 250 in motion. While not illustrated herein, the aircraft 210 includes one or more landing gear 194 (FIG. 11) configured to engage a support surface when the aircraft 210 is landed. In some embodiments, the landing gear 194 may be coupled to the nacelles 254, the wings 230, 234, or the fuselage 214, or any other part of the aircraft 210 to support the aircraft 210 when landed. The aircraft 210 may include additional systems not discussed herein relating to control, thrust, or other flight capabilities.

With reference to FIGS. 16 and 17, in some embodiments, the aircraft 210 may be movable between an extended configuration (FIG. 17) and a folded configuration (FIG. 16). Each wing 230, 234 includes a first joint 274 and a second joint 278 that allow the wings 230, 234 to fold and create a smaller profile for the aircraft 210. In the illustrated embodiment, each of the wings 230, 234 includes a first panel 282, a second panel 286, and a third panel 290. The first panel 282 is the innermost panel (i.e., closest to the fuselage 214) and includes the proximal end 238 of the wing 230, 234. The first panel 282 is fixed to the first side 223 of the fuselage 214 and extends along the wing axis W in both the extended configuration and the folded configuration. As will be discussed further below, the first panel 282 is supported on the fuselage 214 to rotate about the wing axis W. The first panel 282 is coupled to the first joint 278. The second panel 286 is positioned between the first panel 282 and the third panel 290. The second panel 286 may also be referred to herein as the inboard panel 286. The second panel 286 is coupled to the first panel 282 by the first joint 274. The first joint 274, also referred to herein as the inboard hinge 274, supports the second panel 286 for rotation about a first hinge axis H1. The first hinge axis H1 is parallel to the flight axis F. In the illustrated embodiment, the rotors 250 are positioned on the second panel 286. In other embodiments, rotors 250 may alternatively or additionally be positioned on the fuselage 214, the first panel 282, or the third panel 290. The third panel 290 is the outermost panel (i.e., the furthest from the fuselage 214) and is also referred to herein as the outboard panel 290. The third panel 290 is coupled to the second panel 286 by the second joint 278, also referred to herein as the outboard hinge 278. The third panel 290 is supported by the second joint 278 for rotation about a second hinge axis H2 relative to the second panel 286. The second hinge axis H2 is parallel to the first hinge axis H1 and the flight axis F. While the joints 274, 278 are referred to as hinges, hinge should not be construed to limit the type of joint and instead generally convey the folding relationship between the panels.

With reference specifically to FIG. 16, in the illustrated embodiment, the folded configuration is a generally Z-shaped configuration. The first joint 274 of the first wing 230 is rotated in a first direction (e.g., clockwise as seen in FIG. 16) so the second panel 286 forms an acute angle with the first panel 282, and the second panel 286 is generally adjacent the fuselage 214. The second joint 278 of the first wing 230 is rotated in a second direction, opposite the first direction, (e.g., counter-clockwise as seen in FIG. 16) until the third panel 290 is directly adjacent and extends along the second panel 286. The aircraft 210 is generally symmetrical so the second wing 234 mirrors the first wing 230, and the first joint 274 is rotated in the first direction and the second joint 278 is rotated in the second direction. In other embodiments, the folded configuration may include other angular positions of the joints and other relative positions of the panels. In the illustrated folded configuration, the rotors 250 are arranged in a generally rectangular array and a center of gravity of the aircraft 210 is positioned within the rectangular array and preferably centered on the fuselage 214. The folded configuration offers a smaller profile compared to the extended configuration and may be advantageous for taking off from small spaces. In some embodiments, the aircraft 210 may include more or less than four rotors 250, thereby resulting in different array formations when the aircraft 210 is in the folded configuration. Depending on the number of rotors 250, the aircraft 210 could be configured to be arranged in any number of multi-sided polygon arrays.

While not shown herein, the aircraft 210 may be movable to a storage configuration in which the panels are rotated as close to the fuselage 214 as possible. The storage configuration may result in an even smaller footprint of the aircraft 210. The aircraft 210 may be moved between the folded configuration and the storage configuration while grounded using landing gear (e.g., landing gear 194 illustrated in FIG. 11) to move the second panels 286 relative to the fuselage 214. The aircraft 210 may therefore present a small profile for vertical take-off and landing and an even smaller profile for storage while grounded.

As described with reference to the aircraft 110, the aircraft 210 is operable in a hover mode and is movable between the folded configuration and the extended configuration while airborne. Once the aircraft 210 is unfolded and in the extended configuration, the aircraft 210 may continue to operate in hover mode and move vertically and laterally by the thrust of the rotors 250. Additionally, once in the extended configuration, the aircraft 210 may also transition to a rotor wing mode (FIG. 18) or a cruise mode (FIG. 19).

With reference to FIG. 18, the wings 230, 234 are rotatably supported on the fuselage 214 for rotation about the wing axis W. Specifically, the first panel 282 of the first wing 230 is supported at the first side 223 for rotation about the wing axis W and the first panel 282 of the second wing 234 is supported at the second side 224 of the fuselage for rotation about the wing axis W in an opposite direction. In the illustrated embodiment, the wings 230, 234 are each rotatable from an upright position to an inclined position. In the upright position, shown in FIG. 17, the leading edge 243 of each of the wings 30, 34 is positioned generally above the trailing edge 244 or, in other words, is generally aligned with the trailing edge 244 along the flight axis F. In the inclined position, shown in FIG. 18, the leading edge 243 is generally laterally offset from the trailing edge 244. In the illustrated embodiment, the first wing 230 rotates from the upright position to the inclined position in a counter-clockwise direction when viewed down the wing axis W from the distal end 242 of the second wing 234. The second wing 234 rotates from the upright position to the inclined position in a clockwise direction when viewed down the wing axis W from the distal end 242 of the second wing 234.

In the illustrated embodiment, the fuselage 214 is shaped such that in the upright position, the proximal ends 238 of the wings 230, 234 are not aligned with the shape of the respective side 223, 224 of the fuselage 214. In the inclined position, the proximal ends 238 of the wings 230, 234 are rotated about the wing axis W relative to the sides 223, 224 of the fuselage 214. In the illustrated embodiment, the first wing 230 is rotated away from alignment with the first side 223 and the second wing 234 is rotated toward alignment with the second side 224. In other embodiments, the fuselage 214 may be shaped in other ways. With the wings 230, 234 in the inclined position, the wing assembly 226 resembles a rotor blade assembly. When the wings 230, 234 are in the upright position the rotor axes R of the rotors 250 are generally vertical and parallel to the flight axis F. When the wings 230, 234 are in the inclined position, the rotor axes R of the rotors 250 are generally inclined with respect to vertical and the flight axis F.

With continued reference to FIG. 18, the aircraft 210 is operable in a rotor wing mode, in which the wings 230, 234 are in the inclined position and thus the rotor axes R are inclined with respect to vertical and the flight axis F. The thruster system 246 continues to operate the rotors 250, which now apply an inclined thrust vector, causing the entire wing assembly 226 to rotate about the flight axis F. As the wing assembly 226 rotates, it generates up to a second level of thrust. The second level of thrust is based on the wingspan of the wing assembly 226 (i.e., the distance between the wing tip at the distal end 242 of the first wing 230 and the wing tip at the distal end 242 of the second wing 234). The thrust generated by the wing assembly 226 and the thruster system 246 in rotor wing mode is greater than the thrust generated by the thruster system 246 in hover mode. At least part of the fuselage 214 is rotationally decoupled from the wing assembly 226. For example, in embodiments with a cockpit, the cockpit may be located on a part of the fuselage 214 that does not rotate about the flight axis F.

The aircraft 210 may be transitioned between the hover mode and the rotor wing mode while in flight or airborne. The rotor wing mode may be especially advantageous for providing the needed thrust to lift heavy loads. The aircraft 210 includes an attachment point 266 (FIG. 18). In the illustrated embodiment, the attachment point 266 is coupled to a third side 225 (FIG. 19) of the fuselage 214. While not discussed in detail, the aircraft 210 may be used to lift a load L in the same way as described with reference to FIGS. 15A-15D. The fuselage 214 is divided into a rotating portion and a non-rotating portion. The rotating portion, including the first side 223 and the second side 224, rotate about the flight axis F with the wing assembly 226. The non-rotating portion, including the attachment point 266 (FIG. 18), is rotationally disengaged from the rotating portion so that the non-rotating portion does not rotate relative to the ground. In some embodiments, the non-rotating portion may be coupled to the rotating portion by a passive connection (e.g., a bearing) or by an active connection (e.g., a motor). In other embodiments, other methods may be used to rotationally disengage the attachment point 266 from the wing assembly 226.

As described above, the convertible aircraft 210 is operable in a hover mode and a rotor wing mode to increase the vertical thrust and lifting capabilities of the aircraft 210. The aircraft 210 may be transitioned between the hover mode and rotor wing mode while airborne. The aircraft 210 is further foldable between a folded configuration and an extended configuration and is able to be transitioned while airborne.

With reference to FIG. 19, the aircraft 210 is further operable in cruise mode. The aircraft 210 may transition between hover mode and cruise mode when the aircraft is in the extended configuration. The aircraft 210 may transition to cruise mode while airborne. In cruise mode, the fuselage 214 remains horizontal, and the wings 230, 234 are rotated about the wing axis W until the proximal ends 238 of the wings 230, 234 are aligned or near aligned with the shape of the respective first and second sides 223, 224 of the fuselage 214. The rotor axes R of the rotors 250 are generally horizontal. In cruise mode, the wings 230, 234 are in a cruise position as the leading edges 243 of each wing 230, 234 are toward the nose 218 of the fuselage and the trailing edges 244 of each wing 230, 234 are towards the base 222 of the fuselage. In other words, the aircraft 210 is a tilt-wing type aircraft and the fuselage 214 does not rotate about the wing axis W during the transition from hover mode to cruise mode. In some embodiments, the tilt-wing aircraft can be accomplished by placing components in the fuselage 214 to locate the center of gravity below the wing axis W. In other embodiments, the tilt-wing aircraft can be accomplished by actively tilting the fuselage 214 relative to the wing axis W using one or more actuators configured to pivot the fuselage 214 about the wing axis W to maintain the fuselage 214 in-line with the longitudinal axis LA (FIG. 19). In yet other embodiments, the aircraft 210 may be operable in additional mode or may have additional features relating to cruise mode not discussed herein. Cruise mode may provide a rapid way to cover large distances.

Embodiments disclosed herein are primarily for exemplary purposes. It should be understood that alternative embodiments or various combinations of features described herein may be implemented.

Various features and advantages of the embodiments described herein are set forth in the following claims.

## Claims

1. A tail-sitter aircraft comprising:
a fuselage extending along a flight axis between a nose and a base;
a landing gear assembly configured to support the aircraft when the aircraft is grounded;
a first wing coupled to the fuselage and extending along a wing axis transverse to the flight axis;
a second wing coupled to the fuselage and extending along the wing axis opposite the first wing;
a first thruster defining a first thruster axis having a first blade assembly coupled to the first wing for rotation about the first thruster axis; and
a second thruster defining a second thruster axis having a second blade assembly coupled to the second wing for rotation about the second thruster axis;
wherein the aircraft is operable in a hover mode, in which the first wing and second wing are positioned such that the first thruster axis and the second thruster axis extend in a vertical direction parallel to the flight axis; and
wherein the aircraft is operable in a rotor wing mode, in which the first wing and second wing are rotated equal and opposite about the wing axis such that the first thruster axis and the second thruster axis extend in an inclined direction with respect to the flight axis and the first wing and the second wing rotate about the flight axis.

2. The tail-sitter aircraft of claim 1, wherein in the rotor wing mode, the first thruster and the second thruster are operable to drive the first wing and the second wing to rotate with respect to the flight axis.

3. The tail-sitter aircraft of claim 1 or 2, wherein in the hover mode, the aircraft is capable of generating a first amount of thrust and wherein in the rotor wing mode, the aircraft is capable of generating a second amount of thrust, greater than the first amount of thrust.

4. The tail-sitter aircraft of claim 3, wherein the first amount of thrust corresponds to the thrust generated by the first thruster and the second thruster and/or the second amount of thrust corresponds to the thrust generated by the rotation of the first wing and the second wing about the flight axis.

5. The tail-sitter aircraft of one of claims 1-4, wherein the aircraft is further operable in a cruise mode, in which the flight axis is generally horizontal, and the wing axis is generally horizontal.

6. The tail-sitter aircraft of one of claims 1-5, wherein the fuselage includes an attachment connection configured to engage a load to enable the aircraft to carry the load, particularly wherein in the rotor wing mode, the fuselage rotates about the flight axis with the first wing and the second wing and wherein the attachment connection rotates with respect to the fuselage and can be controlled rotationally with respect to the ground, to maintain or change a heading angle of external loads.

7. The tail-sitter aircraft of one of claims 1-6, wherein the first thruster is one of a pair of first thrusters coupled to the first wing, and the second thruster is one of a pair of second thrusters coupled to the second wing.

8. A convertible aircraft comprising:
a fuselage defining a flight axis; and
a wing assembly including a pair of wings, each wing including
a first panel coupled to the fuselage and extending along a wing axis, transverse to the flight axis,
a second panel including a thruster having a blade assembly configured to rotate about a thruster axis,
a first hinge configured to couple the second panel to the first panel for pivoting about a first hinge axis,
a third panel, and
a second hinge configured to couple the third panel to the second panel for pivoting about a second hinge axis, parallel to the first hinge axis.

9. The convertible aircraft of claim 8, wherein the aircraft is movable between a folded configuration in which the second panel and third panel of each wing are inclined with respect to the wing axis, and an extended configuration in which the second panel and third panel of each wing are aligned with the wing axis.

10. The convertible aircraft of claim 9, wherein the thruster of each wing is one of a pair of thrusters each defining a thruster axis, and wherein each thruster includes a blade assembly rotatable about the thruster axis, particularly wherein in the folded configuration the thrusters are arranged in a multi-sided polygon array and in the extended configuration the thrusters are arranged along a line.

11. The convertible aircraft of one of claims 9-10, wherein the aircraft is movable between the folded configuration and the extended configuration during flight.

12. The convertible aircraft of one of claims 8-11, wherein the first wing and the second wing are each rotatable with respect to the fuselage about the wing axis when the associated second panel and the associated third panel are aligned with the wing axis, particularly wherein the aircraft is movable to a rotor wing configuration in which the first wing and second wing are rotated about the wing axis and the wing assembly rotates about the flight axis.

13. A tail-sitter aircraft comprising:
a fuselage extending along a flight axis between a nose and a base;
a landing gear assembly configured to support the aircraft with the flight axis generally orthogonal to the ground while the aircraft is grounded;
a first wing coupled to the fuselage and extending along a wing axis transverse to the flight axis, the first wing including a first innermost panel coupled to the fuselage for rotation about the wing axis, a first inboard panel hingedly coupled to the first innermost panel, and a first outboard panel hingedly coupled to the first inboard panel;
a first thruster coupled to the first wing and defining a first thruster axis;
a second wing coupled to the fuselage and extending along the wing axis, opposite the first wing, the second wing including a second innermost panel coupled to the fuselage for rotation about the wing axis, a second inboard panel hingedly coupled to the second innermost panel, and a second outboard panel hingedly coupled to the second inboard panel; and
a second thruster coupled to the second wing and defining a second thruster axis;
wherein the aircraft is operable in a plurality of modes including at least two modes selected from
1) a folded hover mode, in which the first inboard panel is inclined with respect to the first innermost panel, the second inboard panel is inclined with respect to the second innermost panel, and the first thruster axis and the second thruster axis are parallel to the flight axis;
2) an extended hover mode, in which the first inboard panel is aligned with the first innermost panel, the second inboard panel is aligned with the second innermost panel, and the first thruster axis and the second thruster axis extend in a vertical direction orthogonal to the ground and parallel to the flight axis;
3) a rotor wing mode, in which the first inboard panel and first outboard panel are aligned with the first innermost panel, the second inboard panel and second outboard panel are aligned with the second innermost panel, and the first thruster axis and the second thruster axis are inclined relative to the flight axis; and
4) a cruise mode, in which the first inboard panel is aligned with the first innermost panel, the second inboard panel is aligned with the second innermost panel, the first thruster axis and the second thruster axis extend in a horizontal direction parallel to the ground and parallel to the flight axis;
wherein the aircraft is movable between the plurality of modes in flight.

14. The tail-sitter aircraft of claim 13, wherein
the first thruster is one of a pair of first thrusters each defining a first thruster axis,
each first thruster includes a first blade assembly rotatable about the first thruster axis,
the second thruster is one of a pair of second thrusters each defining a second thruster axis, and
each second thruster includes a second blade assembly rotatable about the second thruster axis.

15. The tail-sitter aircraft of claim 14, wherein the pair of first thrusters and the pair of second thrusters are arranged in a multi-sided polygon array in the folded hover mode, particularly wherein the first innermost panel and the second innermost panel are secured against rotation about the wing axis when the first inboard panel and second inboard panel are inclined with respect to the wing axis.
